# FASCICULE DE BREVET EUROPEEN

(11) **EP 3 560 114 B1**
(45) Date de publication et mention de la délivrance du brevet: **10.07.2024**
(21) Numéro de dépôt: 17828975.7
(22) Date de dépôt: 19.12.2017
(51) Int. Cl.: H04B 10/118

(54) **TRANSMISSION OPTIQUE À PARTIR D'UN SATELLITE À DESTINATION D'UN TERMINAL DE RÉCEPTION**
OPTISCHE ÜBERTRAGUNG VON EINEM SATELLITEN ZU EINEM EMPFANGSENDGERÄT
OPTICAL TRANSMISSION FROM A SATELLITE TO A RECEPTION TERMINAL

(30) Priorité: 23.12.2016 FR 1663277
(43) Date de publication de la demande: 30.10.2019
(73) Titulaire: Airbus Defence and Space SAS, 31402 Toulouse Cedex 4 (FR)
(72) Inventeur: SPERANDEI, Jean, 31402 Toulouse Cedex 4 (FR)
(74) Mandataire: Plasseraud IP
(86) Numéro de dépôt international: PCT/FR2017/053703
(87) Numéro de publication internationale: WO 2018/115721

(56) Documents cités:
- US-A1- 2007 031 150
- US-A1- 2016 043 800

## Description

La présente invention concerne un procédé de transmission optique à partir d'un satellite à destination d'un terminal de réception, ainsi qu'un satellite et un terminal de réception qui sont adaptés pour un tel procédé.

La communication optique, aussi appelée communication laser, est adaptée pour transmettre des quantités importantes de données, car elle permet des débits de transmission de plusieurs gigabits par seconde. De telles données à transmettre en grandes quantités sont des données utiles, par exemple des résultats de mesures ou des données d'images, par opposition à des données de commande du satellite ou de surveillance de son bon fonctionnement, qui sont couramment désignées par «house keeping telemetry» en anglais, et qui correspondent à des quantités très inférieures, et ne nécessitent donc pas des débits de transmission aussi élevés.

On rappelle qu'une transmission optique procède par production, par un émetteur optique vers un récepteur optique, d'un faisceau laser qui est modulé, les données transmises étant codées pour être exprimées par la modulation du faisceau laser. Mais une difficulté des transmissions optiques est le pointage l'un vers l'autre de l'émetteur et du récepteur, à cause de la divergence angulaire du faisceau laser qui est très faible : quelques microradians correspondant à une zone éclairée de quelques mètres de diamètre pour une distance de transmission de 1000 km (kilomètre). Pour résoudre cette difficulté, les terminaux optiques existants réalisent une phase d'acquisition, lors de laquelle deux terminaux qui sont destinés à communiquer l'un avec l'autre se détectent mutuellement, pour adopter ensuite des directions d'émission et de réception du faisceau laser qui sont orientées précisément d'un terminal vers l'autre. Pour cela, chaque terminal doit posséder à la fois une voie d'émission et une voie de réception du faisceau laser. En outre, au moins l'un des deux terminaux doit réaliser un balayage angulaire de sa direction d'émission ou de réception, ce qui peut être long jusqu'à obtenir la détection du faisceau laser par l'autre terminal, et réduit en conséquence la durée disponible pour transmettre ensuite les données utiles. Le terminal qui réalise le balayage doit être équipé pour cela d'un système de variation de sa direction d'émission-réception qui soit rapide et à grand débattement, ce qui augmente la complexité et le coût de ce terminal.

Par ailleurs, les enjeux de complexité, de poids et d'encombrement d'un terminal optique sont encore plus importants lorsque ce terminal est destiné à être embarqué à bord d'un satellite. De même, la longueur de la phase d'acquisition est particulièrement pénalisante pour une application à bord d'un satellite, car la durée qui est ensuite disponible pour transmettre les données utiles est limitée par la durée totale pendant laquelle les deux terminaux optiques restent en visibilité l'un pour l'autre.

US 2016/043800 décrit un système de communication descendante pour microsatellites de type CubeSat, qui est basé sur la détection par un émetteur optique de données utiles, d'un signal de balise optique qui est émis par un récepteur terrestre des données utiles, afin d'ajuster précisément la direction de pointage de l'émetteur des données.

US 2007/031150 concerne un système de communication bidirectionnelle par transmission de signaux laser.

A partir de cette situation, un but de la présente invention est de proposer un nouveau procédé de transmission optique, qui ne présente pas les inconvénients cités précédemment, ou pour lequel ces inconvénients sont réduits.

Pour cela, un premier aspect de l'invention propose un procédé de transmission optique de données utiles à partir d'un satellite à destination d'un terminal de réception optique, suivant la revendication 1.

En effet, les coordonnées de position du satellite peuvent être reçues par radiofréquence par le terminal de réception optique sans pointage préalable du satellite qui soit réalisé avec précision, car la transmission radiofréquence possède un champ d'émission qui est très large. Par ailleurs, les signaux radiofréquence qui contiennent les coordonnées de position du satellite peuvent être reçus par le récepteur radiofréquence du terminal de réception optique dès que le satellite entre en visibilité du terminal de réception optique, sans qu'il soit nécessaire d'orienter précisément une direction de réception du récepteur radiofréquence.

En outre, les coordonnées de position du satellite représentent une quantité de données à transmettre qui est très faible, de l'ordre de quelques octets, si bien qu'elles peuvent être transmises très rapidement par radiofréquence. Aussi, des répétitions du procédé de l'invention peuvent permettre d'ajuster en temps réel la direction de réception du récepteur optique du terminal de réception optique.

On entend par rayonnement optique du rayonnement électromagnétique qui possède une longueur d'onde comprise entre 0,4 µm (micromètre) et 10 µm.

On entend par radiofréquence du rayonnement électromagnétique qui possède une fréquence comprise entre 3 kHz (kilohertz) et 300 GHz (gigahertz). Avantageusement, l'émetteur radiofréquence du satellite et le récepteur radiofréquence du terminal de réception optique peuvent être adaptés pour des signaux radiofréquence dans la bande S, correspondant à l'intervalle de fréquence de 2 GHz à 3,4 GHz.

Le satellite qui transporte l'émetteur optique peut être par exemple un satellite géostationnaire, ou un satellite à orbite basse, par exemple avec une altitude d'orbite qui est inférieure à 2000 km (kilomètre).

Dans différentes applications de l'invention, les données utiles qui sont transmises optiquement peuvent être des données d'images qui ont été saisies à partir du satellite ou retransmises par le satellite, ou être des résultats de mesures qui ont été effectuées à partir du satellite, ou des résultats de mesures qui sont retransmis par le satellite.

De préférence, le récepteur optique du terminal de réception optique peut être dépourvu de système d'acquisition et de suivi d'émetteur optique. Le coût du terminal de réception optique peut ainsi être réduit dans une mesure supplémentaire, en plus de la réduction de coût qui est procurée par la suppression d'une voie d'émission optique dans ce terminal.

Dans des modes préférés de mise en oeuvre de l'invention, les coordonnées de position du satellite, qui sont transmises par radiofréquence à partir du satellite au terminal de réception optique, peuvent être déterminées à bord du satellite à partir de signaux de géolocalisation qui ont été reçus préalablement par ce satellite. En effet, les systèmes de géolocalisation disponibles fournissent en temps réel la position du satellite avec une précision qui rend possible le pointage de la direction de réception du récepteur optique, appelée direction de réception optique, du terminal de réception optique pour que le récepteur optique détecte le faisceau laser.

La précision du système de géolocalisation est supérieure lorsque ce système est bi-fréquence, notamment pour supprimer des perturbations qui peuvent être causées par l'ionosphère terrestre sur la propagation des signaux radiofréquence utilisés pour la géolocalisation.

Selon un perfectionnement de l'invention, le satellite peut en outre être équipé d'un autre récepteur radiofréquence, et le terminal de réception optique peut en outre être équipé d'un autre émetteur radiofréquence, de sorte que des signaux radiofréquence peuvent aussi être transmis à partir du terminal de réception optique à destination du satellite. Dans ce cas, le procédé peut comprendre les étapes supplémentaires suivantes, qui sont exécutées entre les étapes /2/ et /3/ :
/2a/ à l'aide du contrôleur du satellite, commander le système de contrôle d'attitude et d'orbite du satellite pour varier une direction d'émission de l'émetteur optique du satellite, à partir d'une direction d'émission initiale de cet émetteur optique du satellite qui est supposée dirigée vers le terminal de réception optique, et pour chaque direction d'émission de l'émetteur optique du satellite qui est ainsi produite, générer le faisceau laser à partir du satellite conformément à une puissance d'émission prédéterminée ;
/2b/ pour certaines au moins des directions d'émission de l'émetteur optique du satellite qui sont produites à l'étape /2a/, mesurer une puissance de réception du faisceau laser au terminal de réception optique, et transmettre au satellite par radiofréquence, par ledit autre émetteur radiofréquence du terminal de réception optique à destination du satellite, des valeurs de la puissance de réception du faisceau laser qui sont mesurées au niveau du terminal de réception optique respectivement pour les directions d'émission de l'émetteur optique du satellite ; et
/2c/ à bord du satellite, sélectionner au moins une des directions d'émission de l'émetteur optique du satellite qui ont été produites à l'étape /2a/, pour laquelle un quotient de la puissance de réception du faisceau laser mesurée au niveau du terminal de réception optique, sur la puissance d'émission du faisceau laser, est maximal.

Les étapes /2a/ et /2b/ sont préférablement réalisées simultanément, c'est-à-dire que chaque valeur de la puissance de réception du faisceau laser qui est mesurée au niveau du terminal de réception optique est transmise en temps réel au satellite par radiofréquence.

Les données utiles sont ensuite transmises optiquement à l'étape /3/ en utilisant pour l'émetteur optique du satellite, la direction d'émission qui a été sélectionnée à l'étape /2c/, en étant corrigée pour tenir compte d'un déplacement relatif du satellite et du terminal de réception optique entre les étapes /2a/ et /3/. Un tel perfectionnement permet de pallier une précision qui serait insuffisante pour les coordonnées de position du satellite transmises à l'étape /1/. En particulier, l'utilisation à bord du satellite d'un système de géolocalisation mono-fréquence, pour lequel les signaux de géolocalisation qui sont reçus par le satellite sont des signaux mono-fréquence de géolocalisation, afin de déterminer la position du satellite, est possible. Un tel système de géolocalisation mono-fréquence est moins onéreux qu'un système bi-fréquence.

Dans des mises en oeuvre alternatives de ce perfectionnement, l'étape /2a/ est identique, mais les étapes /2b/ et /2c/ peuvent être remplacées par les suivantes :
/2b'/ pour certaines au moins des directions d'émission de l'émetteur optique du satellite qui sont produites à l'étape /2a/, mesurer une puissance de réception du faisceau laser au terminal de réception optique ; puis
/2c'/ par le terminal de réception optique, transmettre au satellite par radiofréquence, une identification d'au moins une des directions d'émission de l'émetteur optique du satellite qui ont été produites à l'étape /2a/, pour laquelle un quotient de la puissance de réception du faisceau laser mesurée au niveau du terminal de réception optique, sur la puissance d'émission du faisceau laser, est maximal.

Les données utiles sont ensuite transmises optiquement à l'étape /3/ en utilisant pour l'émetteur optique du satellite une direction d'émission qui correspond à l'identification transmise à l'étape /2c'/, en étant corrigée pour tenir compte d'un déplacement relatif du satellite et du terminal de réception optique entre les étapes /2a/ et /3/. Dans ces dernières mises en oeuvre du perfectionnement, la sélection de la direction d'émission de l'émetteur optique du satellite est effectuée au niveau du terminal de réception optique, au lieu d'être effectuée à bord du satellite.

La direction d'émission initiale de l'émetteur optique du satellite, qui est utilisée à l'étape /2a/ et supposée dirigée vers le terminal de réception optique, peut être déterminée à bord du satellite à partir des coordonnées de position du satellite, celles-ci ayant été déterminées à partir des signaux de géolocalisation qui ont été reçus préalablement par le satellite.

Un deuxième aspect de l'invention propose un satellite selon la revendication 7.

Optionnellement, le contrôleur de satellite peut être adapté en outre pour déterminer une direction d'émission de l'émetteur optique afin de transmettre les données utiles, à partir des coordonnées de position du satellite déterminées par le système de géolocalisation, puis corrigées pour tenir compte d'un déplacement relatif du satellite et d'un terminal optique destinataire des données utiles entre un instant de géolocalisation et un instant de transmission des données utiles.

Optionnellement aussi, le contrôleur de satellite peut être adapté en outre pour commander les moyens d'orientation du satellite afin de varier une direction d'émission de l'émetteur optique à partir d'une direction d'émission initiale, et pour commander à cet émetteur optique de générer le faisceau laser pour plusieurs directions d'émission ainsi produites, conformément à une puissance d'émission. Dans ce cas, il peut être adapté en outre pour recevoir, par le récepteur radiofréquence, des valeurs d'une puissance de réception du faisceau laser qui sont associées respectivement à certaines au moins des directions d'émission produites, puis pour sélectionner au moins une des directions d'émission de l'émetteur optique du satellite qui ont été produites, pour laquelle un quotient de la puissance de réception du faisceau laser sur la puissance d'émission du faisceau laser, est maximal. Le contrôleur de satellite commande ensuite les moyens d'orientation du satellite pour diriger la direction d'émission de l'émetteur optique lors d'une transmission optique des données utiles, conformément à la direction d'émission sélectionnée, en tenant compte en outre d'un déplacement relatif du satellite et d'un terminal de réception optique destinataire des données utiles entre un instant de référence de la direction d'émission sélectionnée et un instant de transmission des données utiles.

Alternativement, le récepteur radiofréquence peut recevoir une identification de direction d'émission, qui est destinée à correspondre à celle des directions d'émission pour laquelle le quotient de la puissance de réception du faisceau laser mesurée au niveau du terminal de réception optique, sur la puissance d'émission du faisceau laser, est maximal. Dans ce cas, le contrôleur de satellite commande ensuite les moyens d'orientation du satellite pour diriger la direction d'émission de l'émetteur optique lors d'une transmission optique des données utiles, conformément à l'identification de direction d'émission reçue, en tenant compte en outre d'un déplacement relatif du satellite et du terminal de réception optique destinataire des données utiles entre un instant de référence de l'identification reçue et un instant de transmission des données utiles.

De préférence, le système de géolocalisation qui est embarqué à bord du satellite peut être un système mono-fréquence de géolocalisation.

Avantageusement, les moyens d'orientation du satellite utilisés pour varier la direction d'émission de l'émetteur optique peuvent être adaptés pour modifier une orientation d'une plateforme du satellite, la direction d'émission de l'émetteur optique pouvant alors être fixe par rapport à cette plateforme. Autrement dit, l'émetteur optique peut être dépourvu de système d'orientation de cet émetteur par rapport à la plateforme du satellite. Dans le jargon de l'Homme du métier, aucun système de pointage grossier ou fin n'est utilisé.

Un tel satellite permet de mettre en oeuvre un procédé qui est conforme au premier aspect de l'invention, notamment les étapes /1/ et /3/ d'un tel procédé, et possiblement aussi les perfectionnements de ce procédé qui ont été cités.

Un troisième aspect de l'invention propose un terminal de réception optique selon la revendication 11.

Optionnellement, le contrôleur de réception peut en outre être adapté pour commander à l'émetteur radiofréquence d'émettre des signaux radiofréquence contenant des valeurs de puissance de réception du faisceau laser, qui ont été mesurées par le détecteur de puissance de réception du faisceau laser. Dans ce cas, la direction d'émission optique à adopter pour transmettre les données utiles peut être déterminée à bord du satellite, à partir des valeurs de puissance de réception transmises.

Alternativement, la direction d'émission optique à adopter pour transmettre les données utiles peut être déterminée par le terminal de réception optique. Pour cela, ce terminal peut comprendre en outre :
- des moyens de comparaison de puissances de réception du faisceau laser qui ont été détectées à des instants de réception différents, et des moyens pour permettre d'identifier des directions d'émission du faisceau laser qui correspondent aux puissances de réception détectées.

Alors, le contrôleur de réception est en outre adapté pour commander à l'émetteur radiofréquence d'émettre des signaux radiofréquence qui contiennent une identification d'au moins une direction d'émission du faisceau laser pour laquelle un quotient de la puissance de réception sur une puissance d'émission du faisceau laser est maximal.

De façon générale, un tel terminal de réception optique conforme à l'invention est dépourvu de voie d'émission de signaux laser.

De préférence aussi, un tel terminal de réception optique peut être dépourvu de système d'acquisition et de suivi de l'émetteur optique.

Un tel terminal de réception optique permet de mettre en oeuvre un procédé qui est conforme au premier aspect de l'invention.

D'autres particularités et avantages de la présente invention apparaîtront dans la description ci-après d'exemples de mise en oeuvre non limitatifs, en référence aux dessins annexés, dans lesquels :
- la figure 1 illustre une mise en oeuvre de l'invention entre un satellite et un terminal de réception optique qui est situé sur Terre ; et
- la figure 2 est un schéma qui montre des composants d'un satellite et d'un terminal de réception optique utilisés pour mettre en oeuvre l'invention.

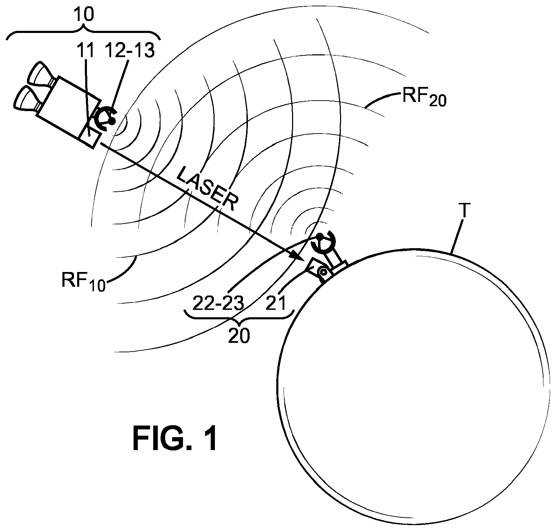

Pour raison de clarté, les dimensions des éléments qui sont représentés dans la figure 1 ne correspondent ni à des dimensions réelles ni à des rapports de dimensions réels. En outre, des références identiques qui sont indiquées dans ces figures désignent des éléments identiques ou qui ont des fonctions identiques.

En référence à la figure 1, le satellite 10 peut être un satellite d'observation à basse altitude d'orbite, par exemple à une altitude orbitale de 600 km (kilomètre) environ. Dans ce cas, il comporte à son bord un système de prise de vues et de mémorisation de données d'image. Ces données d'images, constituant des données utiles, sont destinées à être transmises à une station terrestre 20, qui est située sur la Terre désignée par T.

Pour mettre en oeuvre l'invention, le satellite 10 comporte en outre à son bord un émetteur optique 11 et un émetteur radiofréquence 12. Eventuellement, l'émetteur radiofréquence 12 peut être associé avec un récepteur radiofréquence 13.

La station terrestre 20, correspondant au terminal de réception optique qui a été introduit précédemment dans la description générale de l'invention, comporte un récepteur optique 21 et un récepteur radiofréquence 22. Eventuellement, le récepteur radiofréquence 22 peut être associé avec un émetteur radiofréquence 23.

L'émetteur optique 11 et le récepteur optique 21 sont adaptés pour transmettre optiquement les données utiles à partir du satellite 10 à destination de la station terrestre 20, sous la forme de modulations d'un faisceau laser qui est généré par l'émetteur optique 11 et détecté par le récepteur optique 21, et qui est noté LASER dans les figures. La longueur d'onde du faisceau laser peut être, par exemple, 1550 nm (nanomètre).

L'émetteur radiofréquence 12 et le récepteur radiofréquence 22 sont adaptés pour transmettre par signaux radiofréquence des données à partir du satellite 10 à destination de la station terrestre 20. D'après les propriétés des émissions radiofréquence, une telle transmission du satellite 10 à la station terrestre 20 ne nécessite pas d'ajuster une direction d'émission de l'émetteur 12, ni d'ajuster avec précision une direction de réception du récepteur 22. En effet, des modèles d'émetteurs radiofréquence qui sont disponibles et destinés à être embarqués à bord de satellites terrestres ont des caractéristiques d'émission omnidirectionnelles. En outre, des modèles de récepteurs radiofréquence qui sont disponibles et conçus pour être utilisés au sol ont des ouvertures angulaires de réception qui sont suffisamment larges pour qu'un pointage de leur direction de réception à partir d'une éphéméride du satellite soit suffisant. Toutefois, il peut être utile de compléter le pointage du récepteur radiofréquence qui est situé au sol par un système de poursuite de cible, par exemple par écartométrie. A titre d'illustration, l'exigence de précision pour l'orientation de la direction de réception d'un récepteur radiofréquence terrestre peut être de l'ordre de 0,1° (degré), c'est-à-dire typiquement cent fois moins fine que l'exigence de précision qui concerne la direction de réception d'un récepteur optique, tel que le récepteur optique 21. L'émetteur radiofréquence 12 et le récepteur radiofréquence 22 sont préférentiellement adaptés pour fonctionner dans la bande S des radiofréquences. En général, l'émetteur radiofréquence 12 est déjà prévu dans le satellite 10 pour d'autres utilisations, notamment des utilisations de surveillance du bon fonctionnement du satellite couramment désignées par «House keeping telemetry» en anglais. Le rayonnement radiofréquence qui est produit par l'émetteur 12 est noté RF₁₀ dans les figures.

L'émetteur radiofréquence 23 et le récepteur radiofréquence 13, qui sont optionnels, sont adaptés pour transmettre par signaux radiofréquence des données à partir de la station terrestre 20 à destination du satellite 10. De même que précédemment, une telle transmission ne nécessite pas d'ajuster précisément une direction d'émission de l'émetteur 23, ni une direction de réception du récepteur 13. L'émetteur radiofréquence 23 et le récepteur 13 sont aussi préférentiellement adaptés pour fonctionner dans la bande S des radiofréquences. En général le récepteur radiofréquence 13 est déjà prévu dans le satellite 10 pour d'autres utilisations, notamment pour les besoins de commande du satellite depuis le sol. Le rayonnement radiofréquence qui est produit par l'émetteur 23 est noté RF₂₀ dans les figures.

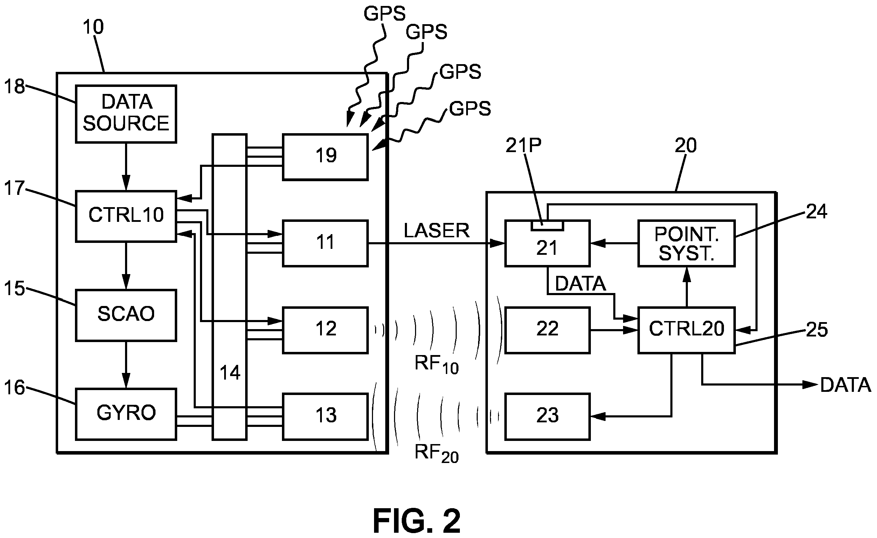

En référence à la figure 2, le satellite 10 est constitué d'une plateforme 14, ou châssis, rigide sur laquelle sont fixés rigidement l'émetteur optique 11, l'émetteur radiofréquence 12, le récepteur radiofréquence optionnel 13, et tous les équipements embarqués supplémentaires qui sont cités dans la suite. En particulier, l'émetteur optique 11 est dépourvu de système de pointage grossier, et de préférence aussi dépourvu de système de pointage fin. On rappelle qu'un système de pointage grossier comprend un support orientable à au moins deux axes, qui est externe à l'émetteur optique et qui permet de modifier une orientation de la direction d'émission de cet émetteur optique. Un système de pointage fin comprend un petit miroir qui est disposé à l'intérieur de l'émetteur optique, et qui permet de varier la direction d'émission de l'émetteur optique autour d'un axe optique de l'émetteur. Le système de pointage grossier varie l'orientation de l'axe du télescope de l'émetteur, alors que le système de pontage fin ne le modifie pas.

Les équipements supplémentaires du satellite 10 comprennent un système de contrôle d'attitude et d'orbite 15, noté SCAO, un système d'orientation du satellite 16, noté GYRO, un contrôleur de satellite 17, noté CTRL10, une source 18 des données utiles à transmettre, notée DATA SOURCE, et optionnellement un système de géolocalisation 19. Le système d'orientation du satellite 16 peut être d'un type quelconque connu, par exemple du type CMG pour «control moment gyro» en anglais, ou du type roue de réaction, ou mixte. La source 18 des données utiles à transmettre peut être le système de prise de vues et de mémorisation de données d'images. Le système de géolocalisation 19 peut être de l'un des types connus, tel que le système GPS, acronyme pour «global positioning system» en anglais, ou tout autre système de géolocalisation qui est déployé autour de la Terre. De façon connue, un tel système de géolocalisation est basé sur la réception de signaux radio de géolocalisation qui sont émis par au moins quatre satellites de géolocalisation, ceux-ci étant indépendants du satellite 10 et de la station terrestre 20. Le système 19 qui est embarqué sur le satellite 10 peut être mono-fréquence ou bi-fréquence, les systèmes bi-fréquence fournissant une précision supérieure pour la position du satellite 10, mais étant plus complexes et plus onéreux que les systèmes mono-fréquence. Usuellement, les signaux radio de géolocalisation appartiennent aux bandes L1 et/ou L2 du domaine des radiofréquences.

La station terrestre 20 comprend en outre un système de pointage 24, noté POINT. SYST., qui est agencé pour modifier une direction de réception du récepteur optique 21. Le récepteur optique 21 et ce système de pointage 24 forment ensemble le récepteur optique orientable qui a été introduit dans la description générale de l'invention. Pour utiliser un perfectionnement de l'invention, le récepteur optique 21 peut incorporer un détecteur 21P, qui est conçu et agencé pour détecter la puissance de réception du faisceau laser au niveau de la station terrestre 20. La station terrestre 20 comprend encore un contrôleur de réception 25, noté CTRL20. Le cas échéant, le contrôleur de réception 25 peut incorporer un module (non représenté) capable de réaliser des comparaisons entre des niveaux de puissance de réception qui sont détectés à des instants différents par le détecteur 21P. En plus de ses autres fonctions, le contrôleur de réception 25 peut recueillir les données utiles, notées DATA, qui sont reçues optiquement par l'intermédiaire du récepteur optique 21, et les transmettre à un utilisateur externe ou les enregistrer sur un support approprié.

Un procédé de transmission des données utiles, à partir du satellite 10 à destination de la station terrestre 20, est décrit maintenant.

Le satellite 10 met à jour la détermination de ses coordonnées de position en utilisant son système embarqué de géolocalisation 19, indépendamment de la station terrestre 20. Une telle mise à jour peut être effectuée un grand nombre de fois pendant chaque révolution du satellite 20 sur son orbite, par exemple périodiquement, afin de réduire les durées pendant lesquelles la position du satellite à un instant donné est calculée à partir de la dernière géolocalisation qui a été effectuée.

Lorsque le satellite 10 entre en visibilité de la station terrestre 20, il transmet par radiofréquence à celle-ci ses coordonnées de position, conformément à la dernière mise à jour par géolocalisation. Comme déjà dit, la transmission par radiofréquence ne nécessite pas de pointage précis de l'émetteur 12 ni du récepteur 22. Le rayonnement radiofréquence qui est mis en oeuvre pour cette transmission des coordonnées de position du satellite 10 est noté RF₁₀ dans les figures. Ainsi, le satellite 10 peut envoyer sa position en temps réel à la station terrestre 20.

A partir de ces coordonnées de position qui sont reçues par la station terrestre 20, le contrôleur de réception 25 commande le système de pointage 24 pour orienter la direction de réception du récepteur optique 21 vers le satellite 10. Si ce pointage terrestre est suffisamment précis, notamment lorsque le système de géolocalisation 19 est bi-fréquence, le satellite 10 est alors dans le champ de réception du récepteur optique 21.

Simultanément, le contrôleur de satellite 17 calcule une direction d'émission cible pour l'émetteur optique 11. Cette direction d'émission cible pour l'émetteur optique 11 peut être calculée aussi à partir de la dernière géolocalisation du satellite 10 qui a été effectuée, et de la position de la Terre dans sa rotation sur elle-même, qui est connue avec une excellente précision. Le contrôleur de satellite 17 commande alors le système de contrôle d'attitude et d'orbite 15 pour orienter l'émetteur optique 11 conformément à la direction d'émission cible. Si la station terrestre 20 est alors dans le champ d'émission de l'émetteur optique 11, un faisceau laser qui est généré par l'émetteur 11 est détecté par le récepteur 21. Un tel faisceau est noté LASER dans les figures. Les données utiles sont alors transmises par modulation de ce faisceau laser.

Le perfectionnement qui est maintenant décrit permet d'ajuster encore plus précisément la direction d'émission de l'émetteur optique 11, à partir de son orientation produite conformément à la direction d'émission cible qui a été calculée. Pour cela, le contrôleur de satellite 17 commande le système de contrôle d'attitude et d'orbite 15 de sorte que la direction d'émission de l'émetteur optique 11 balaye automatiquement un secteur angulaire bidimensionnel autour de la direction d'émission cible qui a été obtenue par calcul. Les dimensions de ce secteur angulaire bidimensionnel peuvent être prédéterminées, ou le balayage peut être effectué dans un secteur angulaire bidimensionnel qui croît progressivement. Le pas du balayage peut aussi être prédéterminé. L'émetteur optique 11 génère le faisceau laser pendant ce balayage, par exemple avec des séquences de modulation qui varient entre des positions successives de la direction d'émission optique. Ces séquences de modulation peuvent permettre d'identifier chaque position de la direction d'émission optique de façon univoque.

Pendant le balayage de la direction d'émission de l'émetteur optique 11, le détecteur 21P mesure le niveau de puissance du faisceau laser à sa réception par le récepteur optique 21. Ce niveau est transmis par radiofréquence au satellite, pour chaque position de la direction d'émission optique qui est produite pendant le balayage. Comme cela a déjà été indiqué, la transmission radiofréquence de chaque niveau de puissance de réception du faisceau laser, correspondant aux positions successives de la direction d'émission optique, ne nécessite pas de pointage précis de l'émetteur 23 ni du récepteur 13. Le contrôleur de satellite 17 détermine alors celle des positions de la direction d'émission optique pour laquelle le niveau de puissance de réception du faisceau laser a été maximal. Il commande ensuite le système de contrôle d'attitude et d'orbite 15 pour orienter la direction d'émission de l'émetteur optique 11 conformément à la position qui avait produit le niveau maximal de puissance de réception lors du balayage. Les données utiles peuvent alors être transmises par l'émetteur optique 11. Dans les figures, le rayonnement radiofréquence qui est utilisé pour retransmettre l'identification de la direction d'émission optique pour laquelle la puissance de réception est maximale, a été noté RF₂₀.

Dans un tel processus, la puissance d'émission du faisceau laser par l'émetteur optique 11, est supposée constante. Si elle est susceptible de varier, d'une façon prédéterminée, la direction d'émission optique qui est sélectionnée est celle qui maximise un quotient de la puissance de réception sur la puissance d'émission, parmi toutes les directions d'émission optique qui sont produites successivement pendant le balayage.

Autrement dit, une boucle a été construite, par transmission optique dans le sens du satellite 10 vers la station terrestre 20, et par transmission radiofréquence dans le sens inverse, pour asservir la direction d'émission optique du satellite 10 à la puissance de réception qui existe à la station terrestre 20. Toutefois, aucun système d'acquisition et de suivi d'émetteur optique, ou ATS, n'est nécessaire pour ce fonctionnement dans le récepteur optique 21 de la station terrestre 20, ni aucun système de détection optique n'est nécessaire à bord du satellite 10. En outre, la quantité de données à transmettre par radiofréquence pour mettre en oeuvre le fonctionnement qui vient d'être décrit, est très faible et compatible avec le débit de la transmission radiofréquence.

Un tel fonctionnement permet de compenser une erreur qui peut exister entre la direction d'émission optique qui est produite à bord du satellite 10 à partir de la direction d'émission cible calculée, d'une part, et d'autre part la direction d'émission optimale pour la puissance de réception, c'est-à-dire la direction d'émission de l'émetteur optique 11 pour laquelle la puissance de réception est maximale. Cette erreur comprend des composantes de bruit, aléatoires par nature, et des composantes de biais. Des composantes de bruit proviennent notamment de la détermination de la position orbitale du satellite 10, de déformations thermoélastiques de l'émetteur optique 11 et de sa fixation sur la plateforme 14 du satellite 10, de l'orientation du satellite 10 telle qu'elle est produite par le système de contrôle d'attitude et d'orbite 15 et par les moyens d'orientation du satellite 16, et proviennent de vibrations qui affectent le satellite 10. L'ensemble de ces composantes de bruit possède une amplitude d'erreur qui est inférieure à ou de l'ordre 20 µrad (microradian), correspondant à une longueur au sol de 12 m (mètre) pour une valeur d'altitude du satellite 10 de 600 km (kilomètre).

Par principe, chaque composante de biais est constante, bien qu'elle soit inconnue initialement. Une première composante de biais peut provenir de la détermination de la position orbitale du satellite, et provoque une erreur de pointage d'émission pour l'émetteur optique 11, qui est inférieure à 10,8 µrad. Une seconde composante de biais peut provenir de la connaissance de l'orientation de l'émetteur optique 11 par rapport à la plateforme 14 du satellite 10. Cette seconde composante de biais provoque une erreur de pointage d'émission pour l'émetteur optique 11, qui est inférieure à quelques microradians. La somme de ces deux composantes de biais est égale à environ 15 µrad, correspondant à une longueur au sol de 10 m environ pour une valeur d'altitude du satellite 10 encore de 600 km. Ce biais total est compensé par l'adoption de la direction d'émission pour l'émetteur optique 11, qui maximise la puissance du faisceau laser qui est reçue au niveau de la station terrestre 20.

Dans des variantes de ce fonctionnement en boucle pour ajuster la direction d'émission optique, la direction d'émission optique pour laquelle la puissance de réception du faisceau laser est maximale, telle que mesurée par le détecteur 21P, peut être sélectionnée au niveau de la station terrestre 20. Dans ce cas, une identification de cette direction d'émission optique est transmise par l'émetteur radiofréquence 23 au satellite 10, puis le contrôleur de satellite 17 commande le système de contrôle d'attitude et d'orbite 15 pour orienter la direction d'émission de l'émetteur optique 11 conformément à l'identification de direction d'émission optique reçue.

Eventuellement, le procédé complet de détermination de la direction d'émission à adopter pour l'émetteur optique 11 peut être répété plusieurs fois, y compris la détermination de la position du satellite 10 par géolocalisation et la sélection de la direction d'émission optique optimale après balayage d'un secteur angulaire. Alors, le biais total peut être estimé comme une valeur moyenne de différences calculées pour plusieurs itérations, entre la direction d'émission optique cible qui est calculée et la direction d'émission optique qui est optimale pour la puissance de réception du faisceau laser.

Bien que cela n'ait pas été indiqué à chaque fois qu'une direction d'émission optique est produite à partir de données de géolocalisation ou de valeurs mesurées pour la puissance de réception du faisceau laser, la direction d'émission optique qui est calculée puis produite tient compte du mouvement relatif du satellite 10 par rapport à la station terrestre 20, entre un instant de référence qui est relatif aux données de géolocalisation ou aux valeurs mesurées, et un instant ultérieur auquel la direction d'émission optique est produite.

De façon générale pour mettre en oeuvre l'invention, les émetteurs et récepteurs radiofréquence qui sont nécessaires peuvent être ceux utilisés pour les besoins de commande du satellite et de surveillance du bon fonctionnement du satellite («House keeping telemetry» en anglais). Leurs débits de transmission radiofréquence sont usuellement faibles ou très faibles, mais ils sont très largement suffisants pour transmettre les données qui sont nécessaires à la mise en oeuvre de l'invention.

Il est entendu que l'invention peut être reproduite en modifiant ou en adaptant des aspects secondaires de celle-ci par rapport aux modes de mise en oeuvre qui ont été décrits en détail ci-dessus.

En particulier, le satellite 10 peut être un satellite géostationnaire, à fonction d'émission de relais pour des données utiles qui sont reçues par ce satellite géostationnaire en provenance d'un autre satellite, ce dernier pouvant être lui-même un satellite d'observation à basse altitude orbitale, ou en provenance d'un aéronef se déplaçant dans l'atmosphère terrestre, tel qu'un avion ou un drone, ou en provenance d'un véhicule se déplaçant sur la Terre.

La station terrestre 20 peut aussi être remplacée par autre satellite, possiblement un satellite géostationnaire, à fonction de réception par exemple pour relayer des données utiles qui sont reçues par ce satellite de la part d'un autre satellite. Alternativement, la station terrestre 20 peut aussi être remplacée par un terminal de réception optique qui est embarqué à bord d'un aéronef ou d'un véhicule se déplaçant sur la Terre.

## Revendications

1. Procédé de transmission optique de données utiles à partir d'un satellite (10) à destination d'un terminal de réception optique (20), suivant lequel le satellite est équipé d'un émetteur optique (11) adapté pour transmettre les données utiles par modulation d'un faisceau laser qui est généré par ledit émetteur, ledit émetteur optique étant fixé rigidement sur une plateforme (14) rigide dudit satellite, et le terminal de réception optique est équipé d'un récepteur optique (21) adapté pour détecter la modulation du faisceau laser lorsque ledit faisceau laser est dirigé vers ledit terminal de réception optique, le terminal de réception optique étant une station de réception qui est située à la surface de la Terre,
et suivant lequel le satellite (10) est en outre équipé d'un émetteur radiofréquence (12), et le terminal de réception optique (20) est en outre équipé d'un récepteur radiofréquence (22), de sorte que des signaux radiofréquence peuvent être transmis à partir du satellite à destination du terminal de réception optique, le procédé comprenant les étapes successives suivantes :
/1/ avant de transmettre les données utiles, déterminer à bord du satellite des coordonnées de position dudit satellite (10) à partir de signaux de géolocalisation qui ont été reçus préalablement par ledit satellite, et transmettre par radiofréquence les coordonnées de position du satellite, à partir dudit satellite à destination du terminal de réception optique (20) ; puis
/2/ pointer vers le satellite (10) une direction de réception du récepteur optique (21) du terminal de réception optique (20), d'après les coordonnées de position du satellite qui ont été transmises par radiofréquence ;
/3/ à l'aide d'un contrôleur (17) du satellite (10), calculer une direction d'émission cible pour l'émetteur optique (11) et commander un système de contrôle d'attitude et d'orbite (15) dudit satellite pour orienter l'émetteur optique conformément à la direction d'émission cible, puis transmettre optiquement les données utiles à partir du satellite, en maintenant la direction de réception du récepteur optique (21) du terminal de réception optique (20) pointée vers le satellite,
la direction d'émission cible pour l'émetteur optique (11) étant calculée par le contrôleur (17) du satellite (10) à partir d'une dernière géolocalisation du satellite qui a été effectuée, et de la position de la Terre dans la rotation de ladite Terre sur elle-même.

2. Procédé selon la revendication 1, suivant lequel les données utiles qui sont transmises optiquement sont des données d'images saisies à partir du satellite (10) ou retransmises par ledit satellite, ou être des résultats de mesures effectuées à partir du satellite, ou des résultats de mesures retransmis par ledit satellite.

3. Procédé selon la revendication 1 ou 2, suivant lequel le récepteur optique (21) du terminal de réception optique (20) est dépourvu de système d'acquisition et de suivi d'émetteur optique.

4. Procédé selon l'une quelconque des revendications 1 à 3, suivant lequel le satellite (10) est en outre équipé d'un autre récepteur radiofréquence (13), et le terminal de réception optique (20) est en outre équipé d'un autre émetteur radiofréquence (23), de sorte que des signaux radiofréquence peuvent être transmis à partir du terminal de réception optique à destination du satellite,
et le procédé comprend les étapes supplémentaires suivantes, exécutées entre les étapes 121 et /3/ :
/2a/ à l'aide du contrôleur (17) du satellite (10), commander le système de contrôle d'attitude et d'orbite (15) dudit satellite pour varier une direction d'émission de l'émetteur optique (11) du satellite (10), à partir d'une direction d'émission initiale dudit émetteur optique du satellite supposée dirigée vers le terminal de réception optique (20), et pour chaque direction d'émission de l'émetteur optique du satellite qui est ainsi produite, générer le faisceau laser à partir du satellite conformément à une puissance d'émission prédéterminée ;
/2b/ pour certaines au moins des directions d'émission de l'émetteur optique (11) du satellite (10) qui sont produites à l'étape /2a/, mesurer une puissance de réception du faisceau laser au terminal de réception optique (20), et transmettre au satellite (10) par radiofréquence, par ledit autre émetteur radiofréquence (23) du terminal de réception optique (20) à destination du satellite (10), des valeurs de la puissance de réception du faisceau laser mesurées au niveau du terminal de réception optique respectivement pour lesdites directions d'émission de l'émetteur optique (11) du satellite (10) ; puis
/2c/ à bord du satellite (10), sélectionner au moins une des directions d'émission de l'émetteur optique (11) du satellite qui ont été produites à l'étape /2a/, pour laquelle un quotient de la puissance de réception du faisceau laser mesurée au niveau du terminal de réception optique, sur la puissance d'émission dudit faisceau laser, est maximal,
et suivant lequel les données utiles sont transmises optiquement à l'étape /3/ en utilisant pour l'émetteur optique (11) du satellite (10) la direction d'émission sélectionnée à l'étape /2c/, en étant corrigée pour tenir compte d'un déplacement relatif du satellite et du terminal de réception optique entre les étapes /2a/ et /3/.

5. Procédé selon l'une quelconque des revendications 1 à 3, suivant lequel le satellite (10) est en outre équipé d'un autre récepteur radiofréquence (13), et le terminal de réception optique (20) est en outre équipé d'un autre émetteur radiofréquence (23), de sorte que des signaux radiofréquence peuvent être transmis à partir du terminal de réception optique à destination du satellite,
et le procédé comprend les étapes supplémentaires suivantes, exécutées entre les étapes 121 et /3/ :
/2a/ à l'aide du contrôleur (17) du satellite (10), commander le système de contrôle d'attitude et d'orbite (15) dudit satellite pour varier une direction d'émission de l'émetteur optique (11) du satellite (10), à partir d'une direction d'émission initiale dudit émetteur optique du satellite supposée dirigée vers le terminal de réception optique (20), et pour chaque direction d'émission de l'émetteur optique du satellite qui est ainsi produite, générer le faisceau laser à partir du satellite conformément à une puissance d'émission prédéterminée ;
/2b'/ pour certaines au moins des directions d'émission de l'émetteur optique (11) du satellite (10) qui sont produites à l'étape /2a/, mesurer une puissance de réception du faisceau laser au terminal de réception optique (20) ; puis
/2c'/ par le terminal de réception optique (20), transmettre au satellite (10) par radiofréquence, une identification d'au moins une des directions d'émission de l'émetteur optique (11) du satellite qui ont été produites à l'étape /2a/, pour laquelle un quotient de la puissance de réception du faisceau laser mesurée au niveau du terminal de réception optique, sur la puissance d'émission dudit faisceau laser, est maximal,
et suivant lequel les données utiles sont transmises optiquement à l'étape /3/ en utilisant pour l'émetteur optique (11) du satellite (10) une direction d'émission qui correspond à l'identification transmise à l'étape /2c'/, en étant corrigée pour tenir compte d'un déplacement relatif du satellite et du terminal de réception optique entre les étapes /2a/ et /3/.

6. Procédé selon la revendication 3 en combinaison avec la revendication 4 ou 5, suivant lequel la direction d'émission initiale de l'émetteur optique (11) du satellite (10), utilisée à l'étape /2a/ et supposée dirigée vers le terminal de réception optique (20), est déterminée à bord du satellite à partir des coordonnées de position du satellite telles que déterminées à partir des signaux de géolocalisation reçus préalablement par ledit satellite.

7. Satellite (10) comprenant :
- un émetteur optique (11) adapté pour transmettre des données utiles par modulation d'un faisceau laser qui est généré par ledit émetteur optique, ledit émetteur optique étant fixé rigidement sur une plateforme (14) rigide dudit satellite ; et
- des moyens d'orientation du satellite (16) adaptés pour varier une direction d'émission de l'émetteur optique (11) en modifiant une orientation de la plateforme (14) dudit satellite, la direction d'émission de l'émetteur optique étant fixe par rapport à ladite plateforme ;
- un système de géolocalisation (19) embarqué à bord dudit satellite (10), et adapté pour déterminer les coordonnées de position du satellite à partir de signaux de géolocalisation qui ont été reçus par ledit système ; et
- un émetteur radiofréquence (12),
le satellite comprenant également un contrôleur de satellite (17) adapté pour commander une émission par l'émetteur radiofréquence (12), de signaux radiofréquence indiquant des coordonnées de position dudit satellite (10), et en ce que le satellite est adapté pour exécuter les étapes /1/ et /3/ d'un procédé conforme à l'une quelconque des revendications 1 à 6.

8. Satellite (10) selon la revendication 7, dans lequel le contrôleur de satellite (17) est adapté en outre pour déterminer une direction d'émission de l'émetteur optique (11) afin de transmettre les données utiles, à partir des coordonnées de position du satellite déterminées par le système de géolocalisation (19), puis corrigées pour tenir compte d'un déplacement relatif du satellite et d'un terminal optique destinataire des données utiles entre un instant de géolocalisation et un instant de transmission des données utiles.

9. Satellite (10) selon la revendication 7 ou 8, comprenant en outre un récepteur radiofréquence (13),
et dans lequel le contrôleur de satellite (17) est adapté en outre pour commander les moyens d'orientation du satellite (16) afin de varier une direction d'émission de l'émetteur optique (11) à partir d'une direction d'émission initiale, et pour commander audit émetteur optique de générer le faisceau laser pour plusieurs directions d'émission ainsi produites, conformément à une puissance d'émission,
et est adapté en outre pour recevoir, par le récepteur radiofréquence (13), des valeurs d'une puissance de réception du faisceau laser associées respectivement à certaines au moins des directions d'émission produites,
et le contrôleur de satellite (17) est adapté en outre pour sélectionner au moins une des directions d'émission de l'émetteur optique (11) du satellite qui ont été produites, pour laquelle un quotient de la puissance de réception du faisceau laser sur la puissance d'émission dudit faisceau laser, est maximal,
puis pour commander les moyens d'orientation du satellite (16) de façon à diriger la direction d'émission de l'émetteur optique (11) lors d'une transmission optique des données utiles, conformément à la direction d'émission sélectionnée, en tenant compte en outre d'un déplacement relatif du satellite et d'un terminal de réception optique destinataire des données utiles entre un instant de référence de la direction d'émission sélectionnée et un instant de transmission des données utiles.

10. Satellite (10) selon la revendication 7 ou 8, comprenant en outre un récepteur radiofréquence (13),
et dans lequel le contrôleur de satellite (17) est adapté en outre pour commander les moyens d'orientation du satellite (16) afin de varier une direction d'émission de l'émetteur optique (11) à partir d'une direction d'émission initiale, et pour commander audit émetteur optique de générer le faisceau laser pour plusieurs directions d'émission ainsi produites, conformément à une puissance d'émission,
puis pour commander les moyens d'orientation du satellite (16) de façon à diriger la direction d'émission de l'émetteur optique (11) lors d'une transmission optique des données utiles, conformément à une identification de direction d'émission qui est reçue par le récepteur radiofréquence (13), en tenant compte en outre d'un déplacement relatif du satellite et d'un terminal de réception optique destinataire des données utiles entre un instant de référence de l'identification reçue et un instant de transmission des données utiles.

11. Terminal de réception optique (20), pour former une station de réception qui est située à la surface de la Terre, comprenant :
- un récepteur optique orientable (21, 24) adapté pour recevoir des données utiles qui sont exprimées par une modulation d'un faisceau laser émis par un satellite et détecté par ledit récepteur optique ; et
- un récepteur radiofréquence (22) et un contrôleur de réception (25), ledit contrôleur de réception étant adapté pour pointer une direction de réception du récepteur optique orientable (21, 24) d'après des coordonnées de position d'un émetteur optique, qui sont émises par un satellite et reçues par le récepteur radiofréquence (22), le terminal de réception optique (20) étant dépourvu de voie d'émission de signaux laser.

12. Terminal de réception optique (20) selon la revendication 11, dépourvu de système d'acquisition et de suivi de l'émetteur optique.

13. Terminal de réception optique (20) selon la revendication 11 ou 12, comprenant en outre :
- un émetteur radiofréquence (23) ; et
- un détecteur (21P) de puissance de réception du faisceau laser,
et dans lequel le contrôleur de réception (25) est en outre adapté pour commander à l'émetteur radiofréquence (23) d'émettre des signaux radiofréquence contenant des valeurs de puissance de réception du faisceau laser, mesurées par le détecteur (21P) de puissance de réception du faisceau laser.

14. Terminal de réception optique (20) selon la revendication 11 ou 12, comprenant en outre :
- un émetteur radiofréquence (23) ;
- un détecteur (21P) de puissance de réception du faisceau laser ; et
- des moyens de comparaison de puissances de réception du faisceau laser détectées à des instants de réception différents, et des moyens pour permettre d'identifier des directions d'émission du faisceau laser correspondant aux puissances de réception détectées,
et dans lequel le contrôleur de réception (25) est en outre adapté pour commander à l'émetteur radiofréquence (23) d'émettre des signaux radiofréquence contenant une identification d'au moins une direction d'émission du faisceau laser pour laquelle un quotient de la puissance de réception sur une puissance d'émission dudit faisceau laser est maximal.

## Patentansprüche

1. Verfahren zur optischen Übertragung von Nutzdaten von einem Satelliten (10) an ein optisches Empfangsendgerät (20), wobei der Satellit mit einem optischen Sender (11) ausgestattet ist, der eingerichtet ist, die Nutzdaten durch Modulation eines durch den Sender erzeugten Laserstrahls zu übertragen, wobei der optische Sender starr auf einer starren Plattform (14) des Satelliten befestigt ist und das optische Empfangsendgerät mit einem optischen Empfänger (21) ausgestattet ist, der eingerichtet ist, die Modulation des Laserstrahls zu erkennen, wenn der Laserstrahl auf das optische Empfangsendgerät gerichtet wird, wobei das optische Empfangsendgerät eine Empfangsstation ist, die sich auf der Erdoberfläche befindet,
und wobei der Satellit (10) ferner mit einem Funkfrequenzsender (12) ausgestattet ist und das optische Empfangsendgerät (20) ferner mit einem Funkfrequenzempfänger (22) ausgestattet ist, so dass Funkfrequenzsignale von dem Satelliten an das optische Empfangsendgerät übertragen werden können,
wobei das Verfahren die folgenden aufeinanderfolgenden Schritte aufweist:
/1/ vor der Übertragung der Nutzdaten Bestimmen der Positionskoordinaten des Satelliten (10) an Bord des Satelliten anhand von Geolokalisierungssignalen, die zuvor von dem Satelliten empfangen wurden, und Übertragen der Positionskoordinaten des Satelliten werden über Funkfrequenz vom Satelliten an das optische Empfangsendgerät (20); dann
/2/ Ausrichten einer Empfangsrichtung des optischen Empfängers (21) des optischen Empfangsendgeräts (20) auf den Satelliten (10) entsprechend den über Funkfrequenz übertragenen Positionskoordinaten des Satelliten;
/3/ mit Hilfe einer Steuerung (17) des Satelliten (10) Berechnen einer Zielsenderichtung für den optischen Sender (11) und Steuern eines Lage- und Umlaufbahnsteuersystems (15) des Satelliten, um den optischen Sender gemäß der Zielübertragungsrichtung auszurichten, dann optisches Übertragen der Nutzdaten von dem Satelliten, wobei die Empfangsrichtung des optischen Empfängers (21) des optischen Empfangsendgeräts (20) auf den Satelliten ausgerichtet beibehalten wird,
wobei die Zielsenderichtung für den optischen Sender (11) von der Steuerung (17) des Satelliten (10) aus einer zuletzt durchgeführten Geolokalisierung des Satelliten und aus der Position der Erde in der Erdrotation um sich selbst berechnet wird

2. Verfahren nach Anspruch 1, wobei die optisch übertragenen Nutzdaten von dem Satelliten (10) erfasste oder von diesem Satelliten weitergeleitete Bilddaten oder Ergebnisse von durch den Satelliten durchgeführten Messungen oder Ergebnisse von Messungen, die von diesem Satelliten weitergeleitet werden, sind.

3. Verfahren nach Anspruch1 oder 2, wobei der optische Empfänger (21) des optischen Empfangsendgeräts (20) kein optisches Sendererfassungs- und Verfolgungssystem aufweist.

4. Verfahren nach einem der Ansprüche 1 bis 3, wobei der Satellit (10) ferner mit einem weiteren Funkfrequenzempfänger (13) ausgestattet ist und das optische Empfangsendgerät (20) ferner mit einem weiteren Funkfrequenzsender (23) ausgestattet ist, so dass Funkfrequenzsignale von dem optischen Empfangsendgerät an den Satelliten übertragen werden können,
und wobei das Verfahren die folgenden zusätzlichen Schritte aufweist, die zwischen den Schritten /2/ und /3/ ausgeführt werden:
/2a/ Steuern des Lage- und Umlaufbahnsteuersystems (15) des Satelliten mit Hilfe der Steuerung (17) des Satelliten (10), um eine Senderichtung des optischen Senders (11) des Satelliten (10) ausgehend von einer anfänglichen Übertragungsrichtung des optischen Senders, von der angenommen wird, dass sie auf das optische Empfangsendgerät (20) gerichtet ist, zu ändern, und um für jede so erzeugte Senderichtung des optischen Satellitensenders den Laserstrahl von dem Satelliten gemäß einer vorbestimmten Sendeleistung zu erzeugen;
/2b/ zumindest für gewisse der in Schritt /2a/ erzeugten Senderichtungen des optischen Senders (11) des Satelliten (10), Messen einer Empfangsleistung des Laserstrahls an dem optischen Empfangsendgerät (20) und Übertragen von auf der Höhe des optischen Empfangsendgeräts gemessenen Werten der Empfangsleistung des Laserstrahls jeweils für die Übertragungsrichtungen des optischen Senders (11) des Satelliten (10) über Funkfrequenz an den Satelliten (10) durch den anderen Funkfrequenzsender (23) des optischen Empfangsendgeräts (20) in Richtung des Satelliten (10); dann
/2c/ Auswählen wenigstens einer der in Schritt /2a/ erzeugten Senderichtungen des optischen Senders (11) des Satelliten, für die ein Quotient aus der auf der Höhe des optischen Empfangsendgeräts gemessenen Empfangsleistung des Laserstrahls und der Sendeleistung des Laserstrahls maximal ist, an Bord des Satelliten (10),
und wobei die Nutzdaten in Schritt /3/ optisch übertragen werden, wobei für den optischen Sender (11) des Satelliten (10) die in Schritt /2c/ gewählte Senderichtung verwendet die korrigiert wird, um eine Relativbewegung des Satelliten und des optischen Empfangsendgeräts zwischen den Schritten /2a/ und /3/ zu berücksichtigen.

5. Verfahren nach einem der Ansprüche 1 bis 3, wobei der Satellit (10) ferner mit einem weiteren Funkfrequenzempfänger (13) ausgestattet ist und das optische Empfangsendgerät (20) ferner mit einem weiteren Funkfrequenzsender ausgestattet ist (23), so dass Funkfrequenzsignale von dem optischen Empfangsendgerät an den Satelliten übertragen werden können,
und wobei das Verfahren die folgenden zusätzlichen Schritte aufweist, die zwischen den Schritten /2/ und /3/ ausgeführt werden:
/2a/ Steuern des Lage- und Umlaufbahnsteuersystems (15) des Satelliten mit Hilfe der Steuerung (17) des Satelliten (10), um eine Senderichtung des optischen Senders (11) des Satelliten (10) ausgehend von einer anfänglichen Übertragungsrichtung des optischen Senders, von der angenommen wird, dass sie auf das optische Empfangsendgerät (20) gerichtet ist, zu ändern, und um für jede so erzeugte Senderichtung des optischen Satellitensenders den Laserstrahl von dem Satelliten gemäß einer vorbestimmten Sendeleistung zu erzeugen;
/2b'/ zumindest für gewisse der in Schritt /2a/ erzeugten Senderichtungen des optischen Senders (11) des Satelliten (10) Messen einer Empfangsleistung des Laserstrahls an dem optischen Empfangsendgerät (20); dann
/2c'/ Übertragen einer Identifikation mindestens einer der in Schritt /2a/ erzeugten Senderichtungen des optischen Senders (11) des Satelliten, für die ein Quotient aus der auf der Höhe des optischen Empfangsendgeräts gemessenen Empfangsleistung des Laserstrahls und der Sendeleistung des Laserstrahls maximal ist, durch das optische Empfangsendgerät (20) über Funkfrequenz an den Satelliten (10),
und wobei in dem Schritt /3/ die Nutzdaten optisch übertragen werden, wobei für den optischen Sender (11) des Satelliten (10) eine Senderichtung verwendet wird, die der in Schritt /2c'/ übertragenen Identifikation entspricht, die korrigiert wird, um eine Relativbewegung des Satelliten und des optischen Empfangsendgeräts zwischen den Schritten /2a/ und /3/ zu berücksichtigen.

6. Verfahren nach Anspruch 3 in Kombination mit Anspruch 4 oder 5, wobei die in Schritt /2a/ verwendete anfängliche Senderichtung des optischen Senders (11) des Satelliten (10), die als auf das optische Empfangsendgerät (20) gerichtet angenommen wird, an Bord des Satelliten anhand der Positionskoordinaten des Satelliten bestimmt wird, wie sie aus den zuvor von dem Satelliten empfangenen Geolokalisierungssignalen ermittelt werden.

7. Satellit (10), der aufweist:
- einen optischen Sender (11), der eingerichtet ist, Nutzdaten durch Modulation eines Laserstrahls, der von dem optischen Sender erzeugt wird, zu übertragen, wobei der optische Sender starr auf einer starren Plattform (14) des Satelliten befestigt ist; und
- Satellitenausrichtungseinrichtungen (16), die eingerichtet sind, eine Senderichtung des optischen Senders (11) durch Modifizieren einer Ausrichtung der Plattform (14) des Satelliten zu ändern, wobei die Senderichtung des optischen Senders relativ zu der Plattform fest ist;
- ein Geolokalisierungssystem (19) an Bord des Satelliten (10), das eingerichtet ist, die Positionskoordinaten des Satelliten aus Geolokalisierungssignalen zu bestimmen, die von dem System empfangen wurden; und
- einen Funkfrequenzsender (12),
wobei der Satellit auch eine Satellitensteuerung (17) aufweist, die eingerichtet ist, eine Übertragung von Funkfrequenzsignalen, die Positionskoordinaten des Satelliten (10) angeben, durch den Funkfrequenzsender (12) zu steuern, und wobei der Satellit eingerichtet ist, die Schritte /1/ und /3/ eines Verfahrens nach einem der Ansprüche 1 bis 6 auszuführen.

8. Satellit (10) nach Anspruch 7, wobei die Satellitensteuerung (17) ferner eingerichtet ist, aus den Positionskoordinaten des Satelliten, die durch das Geolokalisierungssystem (19) bestimmt und dann korrigiert werden, um eine Relativbewegung des Satelliten und eines die Nutzdaten empfangenden optischen Endgeräts zwischen einem Geolokalisierungszeitpunkt und einem Übertragungszeitpunkt der Nutzdaten zu berücksichtigen, eine Senderichtung des optischen Senders (11) zur Übertragung der Nutzdaten zu bestimmen.

9. Satellit (10) nach Anspruch 7 oder 8, der ferner einen Funkfrequenzempfänger (13) aufweist,
wobei die Satellitensteuerung (17) ferner eingerichtet ist, die Satellitenausrichtungseinrichtungen (16) zu steuern, um eine Senderichtung des optischen Senders (11) von einer anfänglichen Senderichtung zu ändern und um den optischen Sender anzuweisen, den Laserstrahl für mehrere derart erzeugte Senderichtungen gemäß einer Sendeleistung zu erzeugen,
und der ferner eingerichtet ist, durch den Funkfrequenzempfänger (13) Werte einer Empfangsleistung des Laserstrahls zu empfangen, die jeweils wenigstens mit gewissen der erzeugten Senderichtungen verknüpft sind,
und wobei die Satellitensteuerung (17) ferner eingerichtet ist, wenigstens eine der erzeugten Senderichtungen des optischen Senders (11) des Satelliten auszuwählen, für die ein Quotient aus der Empfangsleistung des Laserstrahls und der Sendeleistung des Laserstrahls maximal ist,
dann die Satellitenausrichtungseinrichtungen (16) derart zu steuern, dass die Senderichtung des optischen Senders (11) bei einer optischen Übertragung der Nutzdaten entsprechend der gewählten Senderichtung ausgerichtet wird, wobei ferner eine Relativbewegung des Satelliten und eines die Nutzdaten empfangenden optischen Empfangsendgeräts zwischen einem Referenzzeitpunkt der gewählten Senderichtung und einem Übertragungszeitpunkt der Nutzdaten berücksichtigt wird.

10. Satellit (10) nach Anspruch 7 oder 8, der ferner einen Funkfrequenzempfänger (13) aufweist,
wobei die Satellitensteuerung (17) ferner eingerichtet ist, die Ausrichtungseinrichtungen des Satelliten (16) zu steuern, um eine Senderichtung des optischen Senders (11) von einer anfänglichen Senderichtung zu ändern und um den optischen Sender anzuweisen, den Laserstrahl für mehrere derart erzeugte Senderichtungen gemäß einer Sendeleistung zu erzeugen,
um dann die Satellitenausrichtungseinrichtungen (16) so zu steuern, dass die Senderichtung des optischen Senders (11) während einer optischen Übertragung von Nutzdaten entsprechend einer von dem Funkfrequenzempfänger (13) empfangenen Identifikation der Senderichtung gesteuert wird, wobei ferner eine Relativbewegung des Satelliten und eines optischen Zielempfangsendgeräts zwischen einem Referenzzeitpunkt der empfangenen Identifikation und einem Übertragungszeitpunkt der Nutzdaten berücksichtigt wird.

11. Optisches Empfangsendgerät (20) zur Bildung einer Empfangsstation, das sich auf der Erdoberfläche befindet, das aufweist:
- einen ausrichtbaren optischen Empfänger (21, 24), der eingerichtet ist, Nutzdaten zu empfangen, die durch Modulation eines von einem Satelliten ausgesendeten und von dem optischen Empfänger erfassten Laserstrahls ausgedrückt werden; und
- einen Funkfrequenzempfänger (22) und eine Empfangssteuerung (25), wobei die Empfangssteuerung eingerichtet ist, eine Empfangsrichtung des ausrichtbaren optischen Empfängers (21, 24) entsprechend den Positionskoordinaten eines optischen Senders auszurichten, die von einem Satelliten gesendet werden und von dem Funkfrequenzempfänger (22) empfangen werden,
wobei das optische Empfangsendgerät (20) keinen Lasersignal-Übertragungsweg aufweist.

12. Optisches Empfangsendgerät (20) nach Anspruch 11, das kein optisches Sendererfassungs- und Verfolgungssystem aufweist.

13. Optisches Empfangsendgerät (20) nach Anspruch 11 oder 12, das ferner aufweist:
- einen Funkfrequenzsender (23); und
- eine Erkennungseinrichtung (21P) für die Laserstrahlempfangsleistung,
und wobei die Empfangssteuerung (25) ferner eingerichtet ist, den Funkfrequenzsender (23) zu steuern, so dass er Funkfrequenzsignale sendet, die Laserstrahl-Empfangsleistungswerte enthalten, welche von der Erkennungseinrichtung (21P) für die Laserstrahlempfangsleistung gemessen werden.

14. Optisches Empfangsendgerät (20) nach Anspruch 11 oder 12, das ferner aufweist:
- einen Funkfrequenzsender (23);
- eine Erkennungseinrichtung (21P) für die Laserstrahlempfangsleistung, und
- Einrichtungen für den Vergleich von Empfangsleistungen des Laserstrahls, die zu unterschiedlichen Empfangszeitpunkten erfasst wurden, und Einrichtungen, um zu ermöglichen, die Senderichtungen des Laserstrahls entsprechend den erfassten Empfangsleistungen zu identifizieren,
und wobei die Empfangssteuerung (25) ferner eingerichtet ist, den Funkfrequenzsender (23) zu steuern, so dass er Funkfrequenzsignale sendet, welche die Identifikation wenigstens einer Laserstrahlsenderichtung enthalten, für die ein Quotient der Empfangsleistung und der Sendeleistung des Laserstrahls maximal ist.

## Claims

1. A method for optically transmitting useful data from a satellite (10) to an optical reception terminal (20), wherein the satellite is equipped with an optical emitter (11) adapted to transmit the useful data by modulation of a laser beam which is generated by said emitter, said optical emitter being rigidly fixed on a rigid platform (14) of said satellite, and the optical reception terminal is equipped with an optical receiver (21) adapted to detect the modulation of the laser beam when said laser beam is directed towards said optical reception terminal, the optical reception terminal being a reception station which is located on the surface of the Earth,
and wherein the satellite (10) is further equipped with a radiofrequency emitter (12), and the optical reception terminal (20) is further equipped with a radiofrequency receiver (22), so that radiofrequency signals can be transmitted from the satellite to the optical reception terminal,
the method comprising the following successive steps:
/1/ before transmitting the useful data, determining on board the satellite position coordinates of said satellite (10) from geolocation signals which have been previously received by said satellite, and transmitting by radiofrequency the position coordinates of the satellite, from said satellite to the optical reception terminal (20); then
/2/ pointing a reception direction of the optical receiver (21) of the optical reception terminal (20) to the satellite (10), according to the position coordinates of the satellite which have been transmitted by radiofrequency;
/3/ using a controller (17) of the satellite (10), calculating a target emission direction for the optical emitter (11) and controlling an attitude and orbit control system (15) of said satellite to orient the optical emitter in accordance with the target emission direction, then optically transmitting the useful data from the satellite, maintaining the reception direction of the optical receiver (21) of the optical reception terminal (20) pointed towards the satellite,
the target emission direction for the optical emitter (11) being calculated by the controller (17) of the satellite (10) from a last geolocation of the satellite which was carried out, and from the position of the Earth in the rotation of said Earth about itself.

2. The method according to claim 1, wherein the useful data which are optically transmitted are data of images captured from the satellite (10) or retransmitted by said satellite, or results of measurements carried out from the satellite, or measurement results retransmitted by said satellite.

3. The method according to claim 1 or 2, wherein the optical receiver (21) of the optical reception terminal (20) is devoid of any system for acquisition and tracking of the optical emitter.

4. The method according to any one of claims 1 to 3, wherein the satellite (10) is further equipped with another radiofrequency receiver (13), and the optical reception terminal (20) is further equipped with another radiofrequency emitter (23), so that radiofrequency signals can be transmitted from the optical reception terminal to the satellite,
and the method comprises the following additional steps, executed between steps /2/ and /3/:
/2a/ using the controller (17) of the satellite (10), controlling the attitude and orbit control system (15) of said satellite to vary an emission direction of the optical emitter (11) of the satellite (10), from an initial emission direction of said optical emitter of the satellite assumed to be directed towards the optical reception terminal (20), and for each emission direction of the optical emitter of the satellite which is thus produced, generating the laser beam from the satellite in accordance with a predetermined emission power;
/2b/ for at least some of the emission directions of the optical emitter (11) of the satellite (10) which are produced in step /2a/, measuring a reception power of the laser beam at the optical reception terminal (20), and transmitting to the satellite (10) by radiofrequency, by said other radiofrequency emitter (23) of the optical reception terminal (20) to the satellite (10), values of the reception power of the laser beam measured at the optical reception terminal respectively for said emission directions of the optical emitter (11) of the satellite (10); then
/2c/on board the satellite (10), selecting at least one of the emission directions of the optical emitter (11) of the satellite which were produced in step /2a/, for which a quotient of the reception power of the laser beam measured at the optical reception terminal, over the emission power of said laser beam, is maximum,
and wherein the useful data are transmitted optically in step /3/ using for the optical emitter (11) of the satellite (10) the emission direction selected in step /2c/, being corrected to take into account a relative movement of the satellite and the optical reception terminal between steps /2a/ and /3/.

5. The method according to any one of claims 1 to 3, wherein the satellite (10) is further equipped with another radiofrequency receiver (13), and the optical reception terminal (20) is further equipped with another radiofrequency emitter (23), so that radiofrequency signals can be transmitted from the optical reception terminal to the satellite,
and the method comprises the following additional steps, executed between steps /2/ and /3/:
/2a/ using the controller (17) of the satellite (10), controlling the attitude and orbit control system (15) of said satellite to vary an emission direction of the optical emitter (11) of the satellite (10), from an initial emission direction of said optical emitter of the satellite assumed to be directed towards the optical reception terminal (20), and for each emission direction of the optical emitter of the satellite which is thus produced, generating the laser beam from the satellite in accordance with a predetermined emission power;
/2b'/ for at least some of the emission directions of the optical emitter (11) of the satellite (10) which are produced in step /2a/, measuring a reception power of the laser beam at the optical reception terminal (20); then
/2c'/ by the optical reception terminal (20), transmitting to the satellite (10) by radiofrequency, an identification of at least one of the emission directions of the optical emitter (11) of the satellite which were produced in step /2a/, for which a quotient of the reception power of the laser beam measured at the optical reception terminal, over the emission power of said laser beam, is maximum,
and wherein the useful data are transmitted optically in step /3/ using for the optical emitter (11) of the satellite (10) an emission direction which corresponds to the identification transmitted in step /2c'/, being corrected to take into account a relative movement of the satellite and the optical reception terminal between steps /2a/ and /3/.

6. The method according to claim 3 combined with claim 4 or 5, wherein the initial emission direction of the optical emitter (11) of the satellite (10), used in step /2a/ and assumed to be directed towards the optical reception terminal (20), is determined on board the satellite from the position coordinates of the satellite as determined from the geolocation signals previously received by said satellite.

7. A satellite (10) comprising:
- an optical emitter (11) adapted to transmit useful data by modulation of a laser beam which is generated by said optical emitter, said optical emitter being rigidly fixed on a rigid platform (14) of said satellite; and
- satellite orientation means (16) adapted to vary an emission direction of the optical emitter (11) by modifying an orientation of the platform (14) of said satellite, the emission direction of the optical emitter being fixed relative to said platform;
- a geolocation system (19) on board said satellite (10), and adapted to determine the position coordinates of the satellite from geolocation signals which have been received by said system; and
- a radiofrequency emitter (12),
the satellite also comprising a satellite controller (17) adapted to control an emission by the radiofrequency emitter (12) of radiofrequency signals indicating position coordinates of said satellite (10), and in that the satellite is adapted to execute steps /1/ and /3/ of a method according to any one of claims 1 to 6.

8. The satellite (10) according to claim 7, wherein the satellite controller (17) is further adapted to determine an emission direction of the optical emitter (11) in order to transmit the useful data, from the position coordinates of the satellite determined by the geolocation system (19), then corrected to take into account a relative movement of the satellite and an optical terminal intended to receive the useful data between a geolocation instant and an instant of transmission of the useful data.

9. The satellite (10) according to claim 7 or 8, further comprising a radiofrequency receiver (13), and wherein the satellite controller (17) is further adapted to control the orientation means of the satellite (16) so as to vary an emission direction of the optical emitter (11) from an initial emission direction, and to control said optical emitter to generate the laser beam for several emission directions thus produced, in accordance with an emission power,
and is further adapted to receive, by the radiofrequency receiver (13), values of a reception power of the laser beam associated respectively with at least some of the emission directions produced,
and the satellite controller (17) is further adapted to select at least one of the emission directions of the optical emitter (11) of the satellite which have been produced, for which a quotient of the reception power of the laser beam over the emission power of said laser beam is maximum,
then to control the orientation means of the satellite (16) so as to direct the emission direction of the optical emitter (11) during an optical transmission of the useful data, in accordance with the selected emission direction, further taking into account a relative movement of the satellite and an optical reception terminal intended to receive the useful data between a reference instant of the selected emission direction and an instant of transmission of the useful data.

10. The satellite (10) according to claim 7 or 8, further comprising a radiofrequency receiver (13), and wherein the satellite controller (17) is further adapted to control the orientation means of the satellite (16) so as to vary an emission direction of the optical emitter (11) from an initial emission direction, and to control said optical emitter to generate the laser beam for several emission directions thus produced, in accordance with an emission power, then to control the orientation means of the satellite (16) so as to direct the emission direction of the optical emitter (11) during an optical transmission of the useful data, in accordance with an identification of emission direction which is received by the radiofrequency receiver (13), further taking into account a relative movement of the satellite and an optical reception terminal intended to receive the useful data between a reference instant of the identification received and an instant of transmission of the useful data.

11. An optical reception terminal (20), to form a reception station which is located on the surface of the Earth, comprising:
- an orientable optical receiver (21, 24) adapted to receive useful data which are expressed by modulation of a laser beam emitted by a satellite and detected by said optical receiver; and
- a radiofrequency receiver (22) and a reception controller (25), said reception controller being adapted to point a reception direction of the orientable optical receiver (21, 24) according to position coordinates of an optical emitter, which are emitted by a satellite and received by the radiofrequency receiver (22), the optical reception terminal (20) being devoid of any laser signal transmission path.

12. The optical reception terminal (20) according to claim 11, devoid of any system for acquisition and tracking of the optical emitter.

13. The optical reception terminal (20) according to claim 11 or 12, further comprising:
- a radiofrequency emitter (23); and
- a laser beam reception power detector (21P),
and wherein the reception controller (25) is further adapted to control the radiofrequency emitter (23) to emit radiofrequency signals containing reception power values of the laser beam, measured by the laser beam reception power detector (21P).

14. The optical reception terminal (20) according to claim 11 or 12, further comprising:
- a radiofrequency emitter (23);
- a laser beam reception power detector (21P); and
- means for comparing reception powers of the laser beam detected at different reception times, and means for identifying directions of emission of the laser beam corresponding to the reception powers detected,
and wherein the reception controller (25) is further adapted to control the radiofrequency emitter (23) to emit radiofrequency signals containing an identification of at least one emission direction of the laser beam for which a quotient of the reception power over an emission power of said laser beam is maximum.
